# EUROPÄISCHE PATENTANMELDUNG

(11) **EP 1 369 817 A2**
(43) Veröffentlichungstag der Anmeldung: **10.12.2003**
(21) Anmeldenummer: 03012606.4
(22) Anmeldetag: 03.06.2003
(51) Int. Cl.: G06T 1/00

(54) **Verfahren und Vorrichtung zur Analyse eines Objektes**

(30) Priorität: 03.06.2002 DE 10224579
(71) Anmelder: SIEMENS AKTIENGESELLSCHAFT, 80333 München (DE)
(72) Erfinder: Geissler, Klaus, 76532 Baden-Baden (DE); Gussmann, Klaus-Peter, 76187 Karlsruhe (DE); Maier-Hinze, Wolfgang, 76199 Karlsruhe (DE); Weisser, Gerhard, 77704 Oberkirch (DE)

(57) **Zusammenfassung**

Für eine besonders einfache und sichere Analyse eines Objekts werden erfindungsgemäß das Objekt (2) repräsentierende Daten (D) erfasst und anhand eines hinterlegten und/oder aktuell erzeugten Algorithmus derart verarbeitet, dass für das Objekt (2) eine mehrere funktionsbezogene Elementarbausteine (14, 14a bis 14z) umfassende Aktion (16) vorgegeben wird, wobei die Daten (D) mittels der Aktion (16) zugrunde liegenden Relationen anhand der die Aktion (16) repräsentierenden funktionsbezogenen Elementarbausteine (14, 14a bis 14z) analysiert und bewertet werden.

## Beschreibung

Die Erfindung betrifft ein Verfahren und eine Vorrichtung zur Analyse eines Objektes, bei dem das Objekt repräsentierende Daten erfasst und anhand eines hinterlegten und/oder aktuell erzeugten Algorithmus verarbeitet werden.

Auf dem Gebiet der elektronischen Daten- und Signalverarbeitung ist der Einsatz von Bildverarbeitungssystemen bekannt. Hierbei werden beispielsweise bei einer technischen Anlage, z. B. bei einem Förderband, zu deren Überwachung fortlaufend Bilder erfasst und in Abhängigkeit von der zugrunde liegenden technologischen Funktion ausgewertet. Hierzu sind in der Regel umfangreiche Programmierkenntnisse, z. B. in einer Hochsprache, erforderlich. Bedingt durch die Komplexität der technischen Anlage und eines daraus resultierenden aufwendigen Programms zur Bildverarbeitung werden derartige Bildverarbeitungssysteme vom Hersteller als so genannte Blackbox an den Anwender ausgeliefert. Nachteilig dabei ist, dass die Durchführung von kleinen Änderungen der technischen Anlage aufgrund des komplexen technischen Bildverarbeitungssystems und der dieser zugrunde liegenden Bildverarbeitungs- und Programmmethodik besonders zeitintensiv und aufwendig ist. Insbesondere ist es dem Anwender nicht ermöglicht, aus technologischer Sicht verfahrenstechnische Änderungen in die Bildverarbeitungsmethodik, insbesondere in deren Algorithmus, einzuarbeiten.

Der Erfindung liegt demzufolge die Aufgabe zugrunde, ein Verfahren zur Analyse eines Objektes, insbesondere eines Bildobjektes, anzugeben, bei dem mit besonders geringem Aufwand das Objekt hinsichtlich seiner Struktur und Funktion besonders einfach und zuverlässig analysiert werden kann.

Die Aufgabe wird erfindungsgemäß dadurch gelöst, dass bei einem Verfahren zur Analyse eines Objekts das Objekt repräsentierende Daten erfasst und anhand eines hinterlegten und/oder aktuell erzeugten Algorithmus derart verarbeitet werden, dass für das Objekt eine mehrere funktionsbezogene Elementarbausteine umfassende Aktion vorgegeben wird, wobei die Daten mittels der Aktion zugrunde liegenden Relationen anhand der die Aktion repräsentierenden funktionsbezogenen Elementarbausteine analysiert und bewertet werden.

Die Erfindung geht dabei von der Überlegung aus, dass ein zur Analyse eines Objekts, insbesondere eines Bildobjekts, vorgegebener Algorithmus zur Verarbeitung von das Objekt repräsentierenden Daten anstelle der bisher üblichen komplexen Ausprogrammierung des Algorithmus dieser unabhängig von der dem Algorithmus zugrunde liegenden Methodik verdichtet und/oder strukturiert werden kann. Der Erfindung liegt daher die Idee zugrunde, dass eine komplette Analyse des Objekts nur dann leicht auszuführen ist, wenn die Verarbeitung der Daten oder Informationen des betreffenden Objekts in eine Anzahl von technologischen Funktionen oder Aktionen unterteilt wird. Eine derartig, übergeordnete technologische Funktion zur Analyse des Objekts mittels der vorgegebenen Aktion sollte lediglich die diese betreffenden Einzelfunktionen oder Unterfunktionen umfassen.

Für eine komplexe Analyse des Objekts kann der zugehörige Al-gorithmus einfacher und schneller erstellt werden, wenn die der Aktion und somit der technologischen Funktion zugrunde liegenden Einzelfunktionen als funktionsbezogene Elementarbausteine entsprechend ihren Relationen, insbesondere ihren aktionsspezifischen Relationen, zueinander sowie hinsichtlich der durch diese zu verarbeitenden objektspezifischen Daten gefiltert, verdichtet und/oder strukturiert werden können. Dazu sollten die Daten entsprechend der vorgegebenen Aktion anhand der funktionsbezogenen Elementarbausteine in hierarchisch aufgebauten Ebenen mit unterschiedlichen Verarbeitungstiefen verarbeitet werden. Des Weiteren ist es besonders vorteilhaft, wenn die der Aktion zugrunde liegenden Relationen zwischen den funktionsbezogenen Elementarbausteinen, die miteinander in Wechselwirkung stehen, bei der Analyse des Objekts berücksichtigt werden. Anhand eines derartig hierarchisch aufgebauten Algorithmus in technologischer Sicht in Form von Aktionen und diesen zugeordneten Elementarbausteinen ist eine schnelle und zuverlässige Selektion oder Änderung einzelner technologischer Funktionen bei der Analyse des Objektes durch Hinzufügung, Löschung oder Änderung von funktionsbezogenen Elementarbausteinen sicher ermöglicht.

Zweckmäßigerweise wird für das Objekt eine Anzahl von anwenderspezifischen und/oder objektspezifischen Aktionen bestimmt und vorgegeben. Beispielsweise wird bei einem Bildverarbeitungssystem, bei welchem ein Objekt anhand von Bilddaten analysiert und bewertet wird, als objektspezifische Aktion eine technologische Funktion, wie "Vermessung des Objekts", vorgegeben. Als weitere technologische Funktion oder objektspezifische Aktion ist z. B. die Funktion "Objekterkennung" oder "Objektsortierung" vorgesehen. Als eine anwenderspezifische Aktion kann beispielsweise die technologische Funktion "Qualitätskontrolle" vorgegeben werden.

Für die vorgegebene Aktion zur Analyse des Objekts wird zweckmäßigerweise eine Anzahl von funktionsbezogenen Elementarbausteinen ermittelt und vorgegeben. Unter funktionsbezogenen Elementarbausteinen werden besonders einfache Basisfunktionen verstanden, welche in Form eines bereits hinterlegten Elementar- oder Basisalgorithmus mit definierter Schnittstelle vorgegeben sind. Mit anderen Worten: Unter Elementar- oder Basisalgorithmus werden Funktionsbausteine oder -module verstanden, welche in der Art von Unterprogrammen abgeschlossene Basisalgorithmen zur Bildverarbeitung, wie z. B. Binarisierung, umfassen. Die eine abstrakte technologische Funktion darstellende, vorgegebene Aktion wird aus einer Vielzahl von derartigen Elementar-Algorithmen umfassenden funktionsbezogenen Elementarbausteinen gebildet. Mit anderen Worten: Eine einzelne Aktion ist anhand mehrerer funktionsbezogener Elementarbausteine in so genannter Unterprogrammtechnik aufgebaut. Beispielsweise werden für die vorgegebene Aktion "Vermessung des Objekts" als funktionsbezogene Elementarbausteine Basisfunktionen vorgegeben, wie z. B. "Ein Bild des Objekts aufnehmens", "Identifizierung des Objektes im Bild", "Merkmale des Objektes im Bild identifizieren", "Bewertung der Merkmale des Objektes" und "Generierung eines Steuersignals". Bevorzugt werden hierzu durch Auswahl einer Aktion aus mehreren Aktionen, z. B. in einem Auswahlfeld, die der betreffenden Aktion zugehörigen funktionsbezogenen Elementarbausteine in einem weiteren Auswahlfeld ausgegeben.

Zweckmäßigerweise werden für die vorgegebene Aktion aus den vorgegebenen funktionsbezogenen Elementarbausteinen relevante Elementarbausteine selektiert und miteinander verknüpft. Dazu werden die funktionsbezogenen Elementarbausteine oder Einzelfunktionen durch Anwahl im zugehörigen Auswahlfeld selektiert und mittels Verbindungen zwischen den einzelnen funktionsbezogenen Elementarbausteinen miteinander verknüpft. Je nach Art und Ausführung der die betreffende Aktion repräsentierenden Relationen wird die Verknüpfung der funktionsbezogenen Elementarbausteine zeitfolgerichtig, hierarchisch und/oder datenflussrichtig ausgeführt.

Bevorzugt wird zur Verknüpfung der funktionsbezogenen Elementarbausteine der betreffenden Aktion ein erster funktionsbezogener Elementarbaustein vorgegeben und jeder weitere mit diesem zu verbindende Elementarbaustein anhand eines den jeweiligen funktionsbezogenen Eiementarbaustein repräsentierenden Satzes von Parametern ermittelt. Mit anderen Worten: Die die Aktion betreffenden funktionsbezogenen Elementarbausteine werden anhand eines bausteinspezifischen Parametersatzes (auch Satz von Schnittstellenparametern genannt) klassifiziert, selektiert und miteinander verknüpft. Beispielsweise sind funktionsbezogene Elementarbausteine gleichen Typs durch ähnliche Parameter, insbesondere Schnittstellenparameter, charakterisiert. Bei einer Verschaltung dieser funktionsbezogenen und weitgehend ähnlichen Elementarbausteine mit weiteren weitgehend gleiche Parameter aufweisenden, funktionsbezogenen Elementarbausteinen ist eine eindeutige und schnelle Identifizierung und/oder Auswahl der weiteren funktionsbezogenen Elementarbausteine ermöglicht, indem die Auswahl dieser unter Berücksichtigung der diese charakterisierenden Parameter erfolgt, wie z. B. anhand der Anzahl oder Art der Ein- oder Ausgänge.

Als Satz von Parametern, welche die funktionsbezogenen Elementarbausteine charakterisieren, sind zweckmäßigerweise schaltungstechnische und/oder funktionstechnische Kriterien hinterlegt. Mittels der Kriterien wird der jeweilige funktionsbezogene Elementarbaustein dahingehend beschrieben, welche Außenschnittstelle dieser zur Verknüpfung mit weiteren funktionsbezogenen Elementarbausteinen aufweist. Beispielsweise sind als Satz von Parametern für den jeweiligen funktionsbezogenen Elementarbaustein neben schaltungstechnischen Parametern, z. B. nummerische Typen, Strings, Bool, auch betriebstechnische Parameter, wie z. B. bildverarbeitungsspezifische Parameter, wie z. B. Histogramm, Vektor, Bild, oder andere Parameter, wie z. B. Ausgabe eines Steuerungssignals, hinterlegt.

Bevorzugt werden die funktionsbezogenen Elementarbausteine in anwenderspezifische Elementarbausteine und standardisierte Elementarbausteine unterteilt. Bei einem standardisierten Elementarbaustein handelt es sich um eine Standard-Prüffunktion zur Analyse des Objekts, welchem eine definierte Schnittstelle zur Verknüpfung mit weiteren funktionsbezogenen Elementarbausteinen zugeordnet ist. Beispielsweise handelt es sich bei einem standardisierten Elementarbaustein um die technologische Funktion einer Binarisierung oder einer Digitalisierung eines analogen Wertes, bei dem als definierte Schnittstelle als Eingänge ein Bild mit mehreren Graustufen und ein Schwellwert bzw. ein analoger Wert und als Ausgänge ein Binärwert für die Wandlung des Bildes nach Schwarz oder Weiß bzw. ein Binärwert für den Analogwert ausgegeben werden. Demgegenüber handelt es sich bei einem anwenderspezifischen Elementarbaustein um eine durch den Anwender vorgegebene Funktion, welche mindestens einen dieser Funktion zugrunde liegenden Schnittstellenparameter aufweist.

Je nach Art und Komplexität der Analyse des Objekts werden zweckmäßigerweise mehrere Aktionen bestimmt und miteinander verknüpft. Durch einen derartigen hierarchischen Aufbau der Analyse des Objekts aus einer Anzahl von Aktionen, die jeweils eine komplexe technologische Funktion repräsentieren, und einer Mehrzahl von Elementarfunktionen aufweisenden funktionsbezogenen Elementarbausteinen ist es dem Anwender ermöglicht, alle technologischen Funktionen und Informationen oder Daten für die Analyse des Objekts zu überwachen, einzustellen bzw. zu ändern.

Die den Aktionen bzw. den Elementarbausteinen zugrunde liegenden Relationen werden zweckmäßigerweise in einem separaten Datenspeicher hinterlegt. Durch eine derartige Hinterlegung der Relationen, welche insbesondere die Wechselwirkungen und Zusammenhänge von Elementarbausteinen und/oder Aktionen untereinander sowie miteinander wiedergeben, und durch eine Darstellung dieser Relationen, z. B. in Form von Verbindungslinien, ist eine einfache Erstellung und Änderung des Algorithmus für die Analyse des Objekts sicher möglich.

Je nach Art der Analyse des Objekts werden das Objekt charakterisierende Daten bestimmt. Beispielsweise werden für eine Bildanalyse des Objekts als Daten Bilddaten erfasst. Alternativ können für eine andere Analyse anhand des Objektes weitere Daten, wie z. B. materialtechnische Daten, Engineering-Daten, Betriebskenndaten, erfasst werden.

In Abhängigkeit von der vorgegebenen Aktion wird anhand der analysierten und bewerteten Daten ein Merkmal erzeugt. Das Merkmal beschreibt dabei das betreffende Objekt hinsichtlich seiner Eigenschaften näher. Beispielsweise umfasst das Merkmal so genannte Gut-/Schlechtaussagen zu den identifizierten Eigenschaften des Objekts. Bei einer komplexen Analyse des Objekts umfasst das Merkmal z. B. die Markierung einer defekten Stelle des Objekts im Bild.

Je nach Art und Ausbildung des Analyseverfahrens kann das Merkmal auch zur Erzeugung eines Ausgangs- oder Steuersignals zu Steuerungszwecken verwendet werden. Beispielsweise wird bei einer vorgegebenen Aktion "Sortieren von Objekten auf einem Förderband" anhand der erfassten, analysierten sowie bewerteten Daten identifiziert, ob es sich bei dem zu analysierenden Objekt um eine "Schraube" oder eine "Mutter" handelt, wobei bei Identifizierung einer Schraube ein betreffendes Steuersignal generiert wird. Beispielsweise werden bei einer Förderbandüberwachung die auf dem Förderband bewegten Objekte, wie z. B. Schrauben oder Muttern, anhand der erfassten Bilddaten identifiziert und mittels Steuerungssignalen, welche das Förderband hinsichtlich Förderrichtung und Geschwindigkeit beeinflussen, selektiert.

Die zweitgenannte Aufgabe wird erfindungsgemäß gelöst durch eine Vorrichtung zur Analyse eines Objekts mit einer Eingabeeinheit zur Erfassung von das Objekt repräsentierenden Daten und einer Datenverarbeitungseinheit zur Verarbeitung der erfassten Daten anhand eines hinterlegten und/oder aktuell erzeugten Algorithmus sowie zur Vorgabe einer mehrere funktionsbezogene Elementarbausteine umfassenden Aktion für das Objekt, wobei die Daten mittels der Aktion zugrunde liegenden Relationen anhand der die Aktion repräsentierenden funktionsbezogenen Elementarbausteine analysiert und bewertet werden. Dabei wird bei einem bereits hinterlegten Algorithmus die Aktion automatisch aktiviert. Zur automatischen Aktivierung der Aktion, auch Bildverarbeitungsaktion genannt, wird beispielsweise ein Eingangs- oder Startsignal, z. B. ein Signal einer Lichtschranke, erfasst und ausgewertet. Alternativ kann die Aktion nach erfolgter automatischer Aktivierung anhand von hinterlegten Elementarbausteinen automatisch erzeugt werden.

Alternativ oder zusätzlich zur automatischen Vorgabe der technologischen Funktion in Form der automatischen Generierung der Aktion ist zweckmäßigerweise ein Eingabemittel zur manuellen Vorgabe vorgesehen. Zur manuellen Auswahl der die Analyse des Objekts charakterisierenden Aktion oder technologischen Funktion ist das Eingabemittel beispielsweise als ein auf dem Bildschirm dargestelltes Aktions- oder Auswahlfeld ausgebildet. Z. B. kann bei einem Berührungsbildschirm durch Drücken des betreffenden druckempfindlichen Sensorfeldes eine Aktion ausgewählt werden. Alternativ kann mittels eines als so genannte Maus ausgebildeten Eingabemittels über ein zugehöriges Zeigerelement die Auswahl der Aktion in einem auf dem Bildschirm ausgegebenen Auswahlfeld erfolgen. Analog zur Auswahl der die Analyse betreffenden Aktion können nach Einstellung der Aktion die diese umfassenden funktionsbezogenen Elementarbausteine in einem weiteren Auswahlfeld vorgegeben, selektiert und anschließend miteinander verknüpft werden.

Bevorzugt sind die Eingabeeinheit, die Datenverarbeitungseinheit und das Eingabemittel über eine Datenübertragungseinheit mit einer Bildschirmeinheit verbunden. Mittels der Eingabeeinheit, welche bevorzugt als optische Kamera ausgebildet ist, werden die Daten des Objektes erfasst. Als optische Kamera dient z. B. eine Videokamera, eine Infrarot-Kamera zur Aufnahme von Wärmebildern oder ein Röntgengerät. Beispielsweise werden für ein auf einem Förderband angeordnetes Objekt fortlaufend mittels der optischen Kamera Bilder aufgenommen. Mittels der Datenverarbeitungseinheit werden die Bilder, d. h. die Bilddaten, anhand der vorgegebenen Aktion mittels der in Relation zueinander gebrachten funktionsbezogenen Elementarbausteine verarbeitet.

Die mit der Erfindung erzielten Vorteile bestehen insbesondere darin, dass durch die Verschaltung oder Verknüpfung von funktionsbezogenen Elementarbausteinen, welche Elementar-Algorithmen oder Unterfunktionen repräsentieren, technologische und komplexe Funktionen in Form einer Aktion besonders schnell und flexibel erzeugt werden können. Bedingt durch die flexible Kombination von Elementar-Algorithmen anhand der Verknüpfung von Elementarbausteinen kann der Benutzer des Analysesystems, z. B. eines Bildverarbeitungssystems, ohne Kenntnis der Bildverarbeitungsmethodik die technologische Funktion selbst erzeugen bzw. eine vorhandene technologische Funktion ändern. Bedingt durch die auf einem Elementar-Algorithmus basierenden funktionsbezogenen Elementarbausteine, welche spezifizierte und eindeutige Außenschnittstellen aufweisen, ist die aus diesen zusammengesetzte Aktion ebenfalls durch eine definierte Außenschnittstelle charakterisiert. Hierdurch ist somit neben der Vorwärts-Analyse des der Aktion zugrunde liegenden Algorithmus auch eine rekursive Bearbeitung des hinterlegten und/oder aktuell erzeugten Algorithmus ermöglicht.

Ausführungsbeispiele der Erfindung werden anhand einer Zeichnung näher erläutert. Darin zeigen:
- Figur 1: schematisch einen Aufbau einer Vorrichtung zur Analyse eines Objekts mit einer Eingabeeinheit und einer Datenverarbeitungseinheit,
- Figur 2: schematisch den Aufbau einer zür Verarbeitung von das Objekt repräsentierenden Daten vorgesehenen Aktion,
- Figur 3: schematisch eine Anzahl von der Aktion zugrunde liegenden funktionsbezogenen Elementarbausteinen,
- Figur 4: schematisch eine Schnittstelle zur Aktivierung der Aktion mittels eines Bediensystems.

Einander entsprechende Teile sind in allen Figuren mit den gleichen Bezugszeichen versehen.

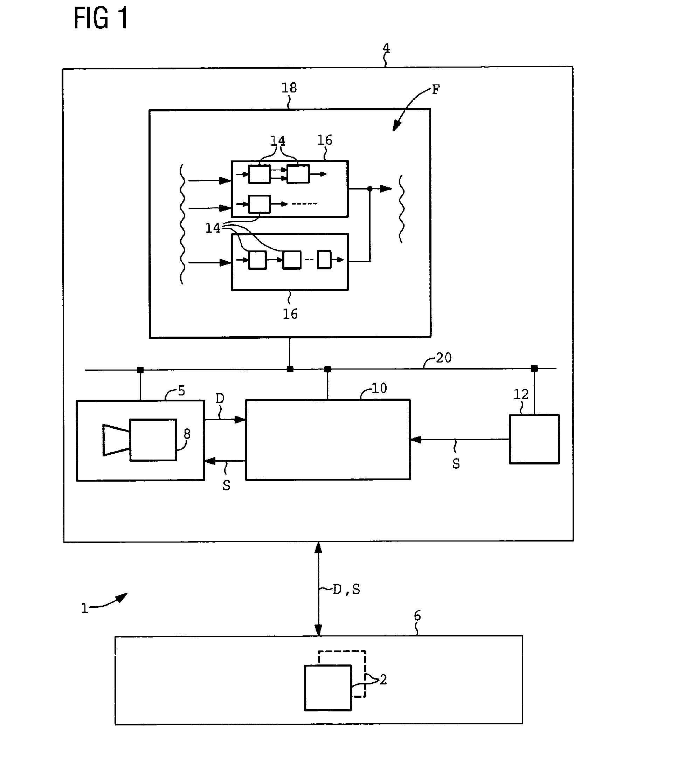

Die Figur 1 zeigt eine Vorrichtung 1 zur Analyse (im Weiteren kurz Analysevorrichtung 1 genannt) eines Objektes 2. Die Analysevorrichtung 1 umfasst ein Bildverarbeitungssystem 4, welches das Objekt 2 repräsentierende Daten D in Form von Bilddaten erfasst. Das Bildverarbeitungssystem 4 dient beispielsweise zur Überwachung oder Steuerung einer technischen Anlage 6, z. B. eines nicht näher dargestellten Förderbandes. Das Bildverarbeitungssystem 4 umfasst als Eingabeeinheit 5 eine optische Kamera 8, z. B. eine Videokamera oder eine Infrarot-Kamera. Mittels der optischen Kamera 8 werden beispielsweise die auf dem Förderband transportierten Objekte 2 anhand von Bilddaten D erfasst. Die Bilddaten D werden zur Verarbeitung einem digitalen Verarbeitungssystem 10 (im Weiteren Datenverarbeitungseinheit 10 genannt) zugeführt.

Zur Verarbeitung der Daten D mittels der Datenverarbeitungseinheit 10 wird eine Aktion 16, auch technologische Funktion, zur Bildverarbeitung automatisch aktiviert. Dazu wird beispielsweise ein Eingangssignal S der technischen Anlage 6 oder des Objektes 2 erfasst und ausgewertet. Beispielsweise dient als Eingangs- oder Startsignal S ein Signal einer Lichtschranke des Förderbandes. Bei Durchlaufen des Objekts 2 der Lichtschranke wird somit automatisch die Bildverarbeitung anhand der Aktion 16 gestartet und ausgeführt.

Alternativ oder zusätzlich kann ein Eingabemittel 12 zur manuellen Vorgabe einer mehrere funktionsbezogene Elementarbausteine 14 umfassenden Aktion 16 durch ein Eingangssignal S vorgesehen sein. Als Eingabemittel 12 dient beispielsweise eine Tastatur oder Maus. Dabei kann ein bereits hinterlegter Algorithmus für die Aktion 16 aktiviert werden. Alternativ kann der Algorithmus für die Aktion 16 erzeugt werden.

Zur Vorgabe und Auswahl der Aktion 16 ist diese in einem Auswahlfenster F auf einem Bildschirm 18 der Datenverarbeitungseinheit 10 darstellbar. Hierbei wird über das Auswahlfenster F des Bildschirms 8 mittels des Eingabemittels 12 eine gewünschte Aktion 16 ausgewählt und selektiert. Die Eingabeeinheit 5, das Datenverarbeitungssystem 10, der Bildschirm 18 sowie das Eingabemittel 12 stehen über ein Datenübertragungssystem 20, z. B. über einen Datenbus, miteinander in Verbindung. Das Datenverarbeitungssystem 10 kann zentral angeordnet sein und mit den übrigen Komponenten z. B. sternförmig verbunden sein.

Im Ausführungsbeispiel ist auf dem Bildschirm 18 für das Bildverarbeitungssystem 4 der Förderanlage 6 eine diese charakterisierende technologische Funktion, wie z. B. "Objektvermessung", in Form der Verknüpfung von mehreren Aktionen 16 dargestellt. Die dort dargestellte Aktion 16 zur Bildverarbeitung des Objekts 2 kann dabei anhand eines hinterlegten Algorithmus automatisch aktiviert und ausgeführt werden. Die Aktion 16 oder mehrere miteinander verknüpfte Aktionen 16 repräsentieren dabei die abstrakte technologische Funktion zur Analyse des Objektes 2. Mit anderen Worten: Eine Aktion 16 stellt im Beispiel der Förderanlage 6 eine abstrakte technologische oder verfahrenstechnische Funktion dar, wie z. B. die Funktion "Objekt vermessen", "Objektsortierung", "Objektzählung", "Qualitätskontrolle". Bedingt durch die Komplexität derartiger Aktionen 16 umfasst diese eine Anzahl von funktionsbezogenen Elementarbausteinen 14.

Die funktionsbezogenen Elementarbausteine 14, 14a, bis 14z sind vorgefertigte bzw. in einer Hochsprache bereits erstellte Software-Module, die in der Art von Unterprogrammen abgeschlossene einfache Funktionen, z. B. Basisalgorithmen der Bildverarbeitung, übernehmen. Dabei werden die funktionsbezogenen Elementarbausteine 14, 14a bis 14z in standardisierte und anwenderspezifische Elementarbausteine 14 unterteilt. Bei einem standardisierten Elementarbaustein 14 ist eine standardmäßige Funktion in der Art einer Kernfunktion, wie z. B. Grenzwertüberwachung, eingebettet. Bei einem anwenderspezifischen Elementarbaustein 14 handelt es sich um einen "modifizierten" Elementarbaustein 14, welcher an das zu analysierende Objekt 2 angepasst oder aus anderen vorgebbaren Kriterien verändert wird.

Bei der Analyse des Objekts 2 werden dann die die Aktion 16 betreffenden Elementarbausteine 14 zur Verarbeitung der Daten D automatisch entsprechend ihrer Verknüpfung anhand der zugrunde liegenden Relationen durchlaufen und ausgeführt. Dabei wird in Abhängigkeit von der vorgegebenen Aktion 16 anhand der analysierten und bewerteten Daten D ein Merkmal erzeugt. Das Merkmal beschreibt dabei das betreffende Objekt 2 hinsichtlich seiner Eigenschaften näher. Beispielsweise umfasst das Merkmal bei der Aktion 16 "Qualitätskontrolle" so genannte Gut-/Schlechtaussagen zu den identifizierten Eigenschaften des Objekts 2 oder bei der Aktion 16 "Objektvermessung" die Abmessungen des betrachteten Objekts 2. Bei einer komplexen Analyse des Objekts 2 kann das Merkmal durch eine Markierung einer defekten Stelle des betrachteten Objekts 2 im Bild dargestellt werden.

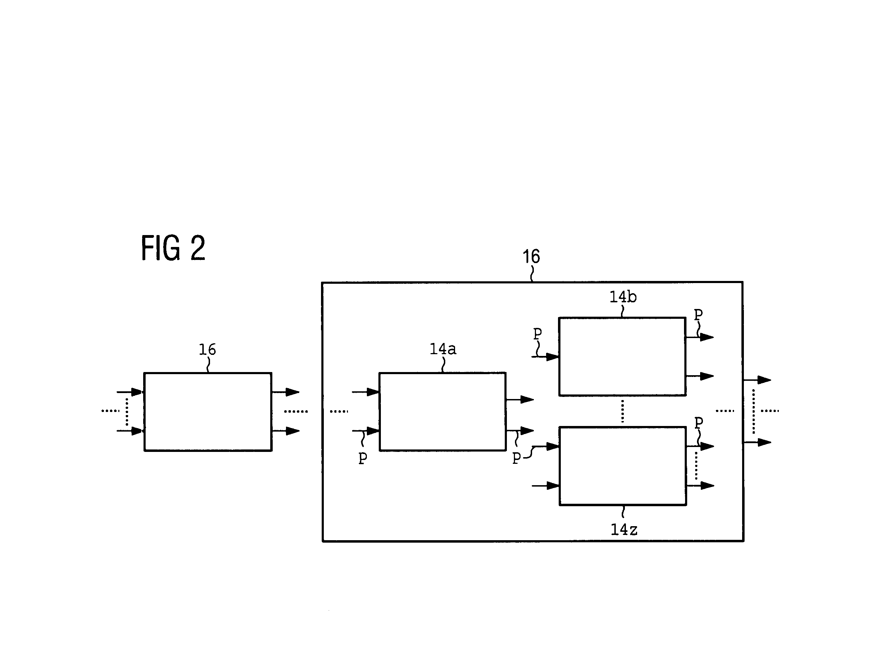

Figur 2 zeigt ein Ausführungsbeispiel für den Aufbau einer als Aktion 16 ausgebildeten technologischen Funktion. Dabei ist die technologische Funktion mittels der Aktion 16 in Form von Unterprogrammen anhand einer Anzahl von funktionsbezogenen Elementarbausteinen 14 realisiert. Zur manuellen Erstellung des einer Aktion 16 zugrunde liegenden Algorithmus wird die Aktion 16 anhand des Auswahlfeldes F im Bildschirm 18 vorgegeben und ausgewählt. Für die vorgegebene Aktion 16 werden über ein weiteres auf dem Bildschirm 18 dargestelltes Auswahlfeld F die diese vorgegebene Aktion 16 repräsentierenden funktionsbezogenen Elementarbausteine 14 ausgegeben. Mittels des Eingabemittels 12 kann der Benutzer aus der Vielzahl der vorgegebenen funktionsbezogenen Elementarbausteine 14 gewünschte bzw. relevante Elementarbausteine 14 selektieren und miteinander verknüpfen.

Zur Verknüpfung der funktionsbezogenen Elementarbausteine 14, welche zur Erstellung der Aktion 16 dienen, sind in Abhängigkeit von der Art oder Funktion der betreffenden Elementarbausteine 14 aktionsspezifische Relationen vorgegeben, welche ebenfalls selektiert werden können. Hierbei wird ausgehend von einem selektierten Elementarbaustein 14a ein weiterer, zur Verfügung stehender und anhand der diesem zugrunde liegenden aktionsspezifischen Relation mit dem selektierten Elementarbaustein 14a schaltungstechnisch zu verbindender Elementarbaustein 14b oder 14z bestimmt. Stimmen dabei die anzubindenden Elementarbausteine 14a und 14b bzw. 14a und 14z überein, so ist zur Verknüpfung dieser keine Parametereingabe erforderlich.

Alternativ wird zur Verknüpfung der funktionsbezogenen Elementarbausteine 14 ein erster funktionsbezogener Elementarbaustein 14a vorgegeben und jeder weitere mit diesem zu verbindende funktionsbezogene Elementarbaustein 14b bis 14z anhand eines den jeweiligen funktionsbezogenen Elementarbaustein 14a bis 14z repräsentierenden Satzes von Parametern P ermittelt. Je nach Art und Aufgabe der zugrunde liegenden Funktion der vorgegebenen Aktion 16 werden die funktionsbezogenen Elementarbausteine 14 hierarchisch, zeitfolgerichtig, typkonform und/oder datenflussrichtig miteinander verknüpft. Zur automatischen und besonders schnellen und einfachen Verknüpfung der funktionsbezogenen Elementarbausteine 14 dient der Satz von Parametern P. Bei den Parametern P handelt es sich beispielsweise um so genannte Schnittstellenparameter, welche schaltungstechnische Parameter, wie Ein-/Ausgänge, signalflusstechnische Parameter, wie z. B. Verknüpfungen, Abhängigkeiten, Funktionen, Kombinationen, darstellen.

Je nach Art des zu analysierenden Objektes 2 können zusätzlich zur Analyse des Objektes 2 anhand einer einzelnen Aktion 16 mehrere Aktionen 16 bestimmt und miteinander verknüpft werden. Insbesondere bei komplexen technischen Anlagen, wie z. B. einem Förderband 6, werden mehrere technologische Funktionen in Form von hintereinander geketteten Aktionen 16, wie z. B. "Objekterkennung", "Objektvermessung", "Objektsortierung", usw., zur Analyse des Objekts 2 miteinander verknüpft und verarbeitet. In Abhängigkeit von der eingestellten oder vorgegebenen Analysenart wird das Objekt 2 anhand einer hinterlegten und/oder aktuell erzeugten Aktion 16 analysiert. In den Figuren 1 und 2 ist sowohl das Verfahren zur Erstellung einer Aktion 16 als auch das Verfahren zur Analyse des Objekts 2 anhand der automatischen Verarbeitung einer aktivierbaren Aktion 16 zur Bildverarbeitung beschrieben, wobei die automatisch aktivierbare Aktion 16 parallel zu deren Verarbeitung auf dem Bildschirm 18 ausgegeben wird.

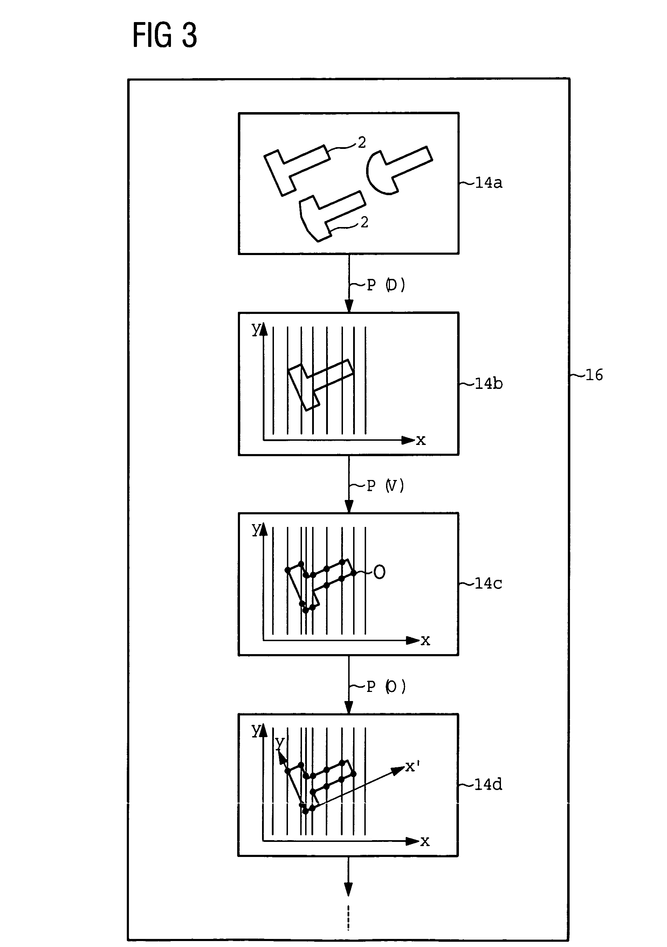

In Figur 3 ist ein weiteres Beispiel für die Analyse des Objekts 2 anhand einer bereits erstellten Aktion 16 "Objekterkennung" in Form von miteinander verknüpften funktionsbezogenen Elementarbausteinen 14a bis 14d dargestellt. Die die technologische Funktion "Objekterkennung" repräsentierende Aktion 16 weist dabei eingangsseitig als funktionsbezogenen Elementarbaustein 14a den Elementar-Algorithmus zur Erfassung von Bilddaten D auf. Dabei werden mittels des Elementarbausteins 14a die Bilddaten D anhand der Eingabeeinheit 5 erfasst. Die Bilddaten oder Daten D werden als Parameter P dem funktionsbezogenen Elementarbaustein 14b zugeführt. Der Elementarbaustein 14b umfasst als Elementar-Algorithmus die Suche von steigenden und fallenden Flanken auf einer Schar von Vektoren V in X-Richtung und/oder Y-Richtung. Die Schar von Vektoren V wird als Parameter P dem nächsten Elementarbaustein 14c zugeführt. Falls das Objekt 2, hier beispielsweise eine Schraube, anhand der steigenden und/oder fallenden Flanken identifiziert wird, werden je Vektor V die gefundenen Punkte O markiert. Die gefundenen Punkte O werden zur Ermittlung eines objektbezogenen Koordinatensystems X-Y dem nächsten Elementarbaustein 14d zugeführt. Je nach Funktionsgrad oder Funktionstiefe der Aktion 16 können weitere Elementarbausteine 14e bis 14z vorgesehen sein. Z. B. kann nach der Identifizierung des objektbezogenen Koordinatensystems Y-X das identifizierte Objekt 2, hier die Schraube, mittels eines weiteren Elementarbausteins 14e bewertet, z. B. vermessen, werden.

Alternativ zu der technologischen Funktion _{"}Objekterkennung" oder "Vermessung von Objekten" der beschriebenen Aktion 16 kann als technologische Funktion "Finde rundes oder rechteckiges Objekt und liefere dessen Mittelpunkt" vorgegeben werden. Diese Aktion 16 wird, wie bereits beschrieben, über ein Auswahlfeld F im Bildschirm 18 ausgewählt. Als Eingangsparameter P hätte die dieser Funktion zugrunde liegende Aktion 16 eine Benutzereingabe. Beispielsweise muss der Anwender oder Benutzer des Bildverarbeitungssystems 4 zur Aktivierung der betreffenden Aktion 16 mittels eines der Auswahlfelder F eingeben, ob es sich bei dem Objekt 2 um ein rundes oder rechteckiges Objekt handelt. Als Ausgangsparameter P muss der Anwender in diesem Fall für die betreffende Aktion 16 den Parameter "Mittelpunkt des Objekts" eingeben. Die Aktion 16 ist dann wie folgt in einer Anzahl von hintereinander geschalteten funktionsbezogenen Elementarbausteinen 14 realisiert:
- Suche auf einer Schar von Vektoren V in X-Richtung die steigenden und fallenden Flanken,
- suche auf einer Schar von Vektoren V in Y-Richtung die steigenden und fallenden Flanken,
- bei einem rechteckigen Objekt:
   - Lege je eine Gerade durch gefundene Punkte O sortiert nach steigenden sowie fallenden Flanken in X- und Y-Richtung (es entstehen vier Geraden),
   - ermittle die Schnittpunkte der Geraden (= Ecken des Rechtecks),
   - ermittle den Mittelpunkt des Rechtecks;
- falls rundes Objekt:
   - Lege durch jeweils zwei benachbarte Punkte O eine Gerade,
   - bilde das Mittellot jeder Geraden (es entsteht eine Gerade, die senkrecht auf der vorgegebenen Gerade steht),
   - ermittle den Schnittpunkt der Lotgeraden (= Mittelpunkt des Kreises).

Somit umfasst die Aktion 16 sowohl für ein rechteckiges Objekt 2 als auch für ein rundes Objekt 2 fünf entsprechend der Funktion hierarchisch gegliederte funktionsbezogene Elementarbausteine 14a bis 14e.

Je nach Art und Aufbau der zugrunde liegenden technischen Anlage 6, z. B. Tankanlage oder Förderband, können weitere Aktionen 16, wie z. B. Füllstandsmessung, Zählfunktion, Sortierfunktion, als vorgefertigte oder bereits erstellte Algorithmen für die Analyse der betreffenden Objekte 2 hinterlegt sein. Alternativ werden die jeweiligen Aktionen 16 über den Bildschirm 18 mittels der Auswahlfelder F durch Auswahl von betreffenden funktionsbezogenen Elementarbausteinen 14, welche miteinander verknüpft werden, automatisch erstellt.

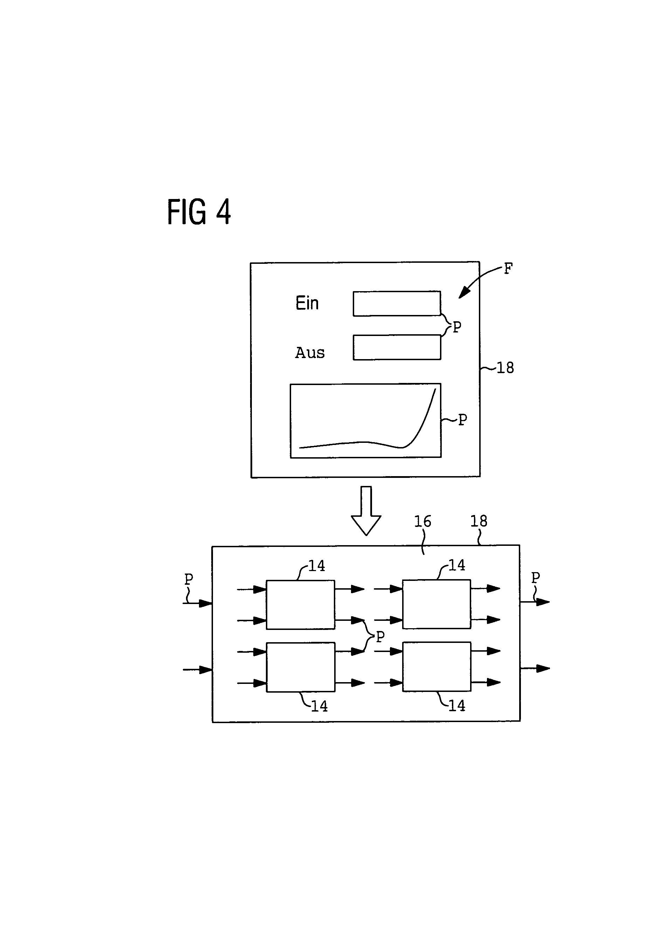

In Figur 4 ist beispielhaft ein Auswahlfeld F für die Eingabe eines Satzes von Parametern P für das oben bereits beschriebene Verfahren zur Erstellung einer Aktion 16 anhand von zugehörigen Elementarbausteinen 14 und deren Verknüpfung dargestellt.

## Patentansprüche

1. Verfahren zur Analyse eines Objekts (2), bei dem das Objekt (2) repräsentierende Daten (D) erfasst und anhand eines hinterlegten und/oder aktuell erzeugten Algorithmus derart verarbeitet werden, dass für das Objekt (2) eine mehrere funktionsbezogene Elementarbausteine (14, 14a bis 14z) umfassende Aktion (16) vorgegeben wird, wobei die Daten (D) mittels der Aktion (16) zugrunde liegenden Relationen anhand der die Aktion (16) repräsentierenden funktionsbezogenen Elementarbausteine (14, 14a bis 14z) analysiert und bewertet werden.

2. Verfahren nach Anspruch 1, bei dem für das Objekt (2) eine Anzahl von anwenderspezifischen und/oder objektspezifischen Aktionen (16) bestimmt und vorgegeben wird.

3. Verfahren nach Anspruch 1 oder 2, bei dem für die vorgegebene Aktion (16) eine Anzahl von funktionsbezogenen Elementarbausteinen (14, 14a bis 14z) ermittelt und vorgegeben wird.

4. Verfahren nach einem der Ansprüche 1 bis 3, bei dem für die vorgegebene Aktion (16) aus den vorgegebenen funktionsbezogenen Elementarbausteinen (14) relevante Elementarbausteine (14a bis 14z) selektiert und miteinander verknüpft werden.

5. Verfahren nach einem der Ansprüche 1 bis 4, bei dem zur Verknüpfung der funktionsbezogenen Elementarbausteine (14, 14a bis 14z) der betreffenden Aktion (16) ein erster funktionsbezogener Elementarbaustein (14a) vorgegeben und jeder weitere mit diesem zu verbindende funktionsbezogene Elementarbaustein (14b bis 14z) anhand eines den jeweiligen funktionsbezogenen Elementarbaustein repräsentierenden Satzes von Parametern (P) ermittelt wird.

6. Verfahren nach einem der Ansprüche 1 bis 5, bei dem die funktionsbezogenen Elementarbausteine (14, 14a bis 14z) in anwenderspezifische Elementarbausteine (14, 14a bis 14z) und standardisierte Elementarbausteine (14, 14a bis 14z) unterteilt werden.

7. Verfahren nach einem der Ansprüche 1 bis 6, bei dem für das Objekt (2) mehrere Aktionen (16) bestimmt und miteinander verknüpft werden.

8. Verfahren nach einem der Ansprüche 1 bis 7, bei dem das Objekt (2) charakterisierende Daten (D) bestimmt werden.

9. Verfahren nach einem der Ansprüche 1 bis 8, bei dem als Daten (D) Bilddaten erfasst werden.

10. Verfahren nach einem der Ansprüche 1 bis 9, bei dem anhand der analysierten und bewerteten Daten (D) ein Merkmal erzeugt wird.

11. Verwendung des Verfahrens nach einem der Ansprüche 1 bis 10 zur Bildanalyse eines Objekts (2), bei dem objektspezifische Daten (D) erfasst und anhand mindestens einer vorgegebenen Aktion (16) verarbeitet, analysiert und bewertet werden.

12. Verfahren zur Erstellung eines Algorithmus zur Durchführung des Verfahrens zur Analyse eines Objekts (2) nach einem der Ansprüche 1 bis 10.

13. Vorrichtung zur Analyse eines Objekts (1) mit einer Eingabeeinheit (5) zur Erfassung von das Objekt (2) repräsentierenden Daten (D) und einer Datenverarbeitungseinheit (10) zur Verarbeitung der erfassten Daten (D) anhand eines hinterlegten und/oder aktuell erzeugten Algorithmus sowie zur Vorgabe einer mehrere funktionsbezogene Elementarbausteine (14, 14a bis 14z) umfassenden Aktion (16) für das Objekt (2), wobei die Daten (D) mittels der Aktion (16) zugrunde liegenden Relationen anhand der die Aktion (16) repräsentierenden funktionsbezogenen Elementarbausteine (14, 14a bis 14z) analysiert und bewertet werden.

14. Vorrichtung nach Anspruch 13, bei dem ein Eingabemittel (12) zur Vorgabe einer Aktion (16) für das Objekt (2) vorgesehen ist.

15. Vorrichtung nach Anspruch 13 oder 14, bei dem die Eingabeeinheit (5), die Datenverarbeitungseinheit (10) und das Eingabemittel (12) über eine Datenübertragungseinheit (20) mit einer Bildschirmeinheit (18) verbunden ist.

16. Vorrichtung nach einem der Ansprüche 13 bis 15, bei dem die Eingabeeinheit (5) als optische Kamera (8) ausgebildet ist.

17. Vorrichtung nach einem der Ansprüche 13 bis 16, bei dem das Eingabemittel (12) als ein auf dem Bildschirm (18) dargestelltes Auswahlfeld (F) ausgebildet ist.
